# EUROPÄISCHE PATENTANMELDUNG

(11) **EP 3 913 941 A1**
(43) Veröffentlichungstag der Anmeldung: **24.11.2021**
(21) Anmeldenummer: 20000189.9
(22) Anmeldetag: 17.05.2020
(51) Int. Cl.: H04W 4/90

(54) **KOMMUNIKATIONSSYSTEM MIT HÖCHSTER VERFÜGBARKEIT**

(71) Anmelder: Grass, Reinhard, 6833 Klaus (AT); Bogo, Marco, 8405 Winterthur (CH)
(72) Erfinder: Grass, Reinhard, 6833 Klaus (AT); Bogo, Marco, 8405 Winterthur (CH)

(57) **Zusammenfassung**

***ENTWICKLUNG einer Universellen Funktionsvorrichtung für Sicherheitsrelevante Anwendungen und Steuerung für bestehende sowie zukünftige Kommunikations-, Navigations-, Ortungs-, Peilungs- und* / *oder Informationssysteme und Anwendungen im Bereich der "Mobilen Kommunikation" zur effektiven Nutzung und Anwendung der Vernetzung von "Internet der Dinge" sowie Drohnen zur Sicherheit und Nutzung der Künstlichen Intelligenz im Bereich der Mobilen Kommunikation sowie "Augmented Reality" für die Navigation* - (wörtlich: erweiterte Realität) ist eine digitale Technik bei der die Realität** - **also alle Dinge, die man gerade sieht** - **mit zusätzlichen Informationen in Form von Texten, Grafiken, Animationen, Videos, statischen oder bewegten 3D-Objekten ergänzt wird. WICHTIG: Der Nutzer nimmt virtuelle Elemente in seiner realen Umgebung wahr.**

Es geht um eine Einrichtung zur Verbindung und Steuerung sicherheitsrelevanter Funktionen, wobei Sicherheitsfunktionen und Anwendungen mit Geräten wie Smartphone, Handy, Senioren-Handy, PND (Personal Navigation Device), Tablets, PC etc. bekannt sind. Die Endgeräte für die mobile Kommunikation werden neben dem mobilen Telefonieren, mit verschiedenen Internet-Diensten kommunizieren. E-Mail, Instant-Messaging und Social Networks sind Teil einer Kommunikationskultur, die nicht an ein Notebook mit Datenkarte oder einen stationären Computer gebunden sind.

## Beschreibung

***Universelle Funktionsvorrichtung für Sicherheitsrelevante Anwendungen und Steuerung für bestehende sowie zukünftige Kommunikations-, Navigations-, Ortungs-, Peilungs- und* / *oder Informationssysteme und* / *oder Anwendungen im Bereich der "Mobilen Kommunikation" zur effektiven Nutzung und Anwendung der Vernetzung von "Internet der Dinge"* / *"Internet of Things" sowie Drohnen zur Sicherheit und Nutzung der Künstlichen Intelligenz* / *Kl im Bereich der Mobilen Kommunikation sowie "Augmented Reality für die Navigation"* - *dabei erhält der Nutzer auf dem Weg zu seinem Zielort, zusätzliche Informationen in Abhängigkeit zum aktuellen Standort (z.B. Stauwarnungen; Umleitungen; Gebäudeinformationen).***

Es geht um eine Einrichtung zur Verbindung und Steuerung sicherheitsrelevanter Funktionen, wobei Sicherheitsfunktionen und Anwendungen mit Geräten wie Smartphone, Handy, Senioren-Handy, PND (Personal Navigation Device), Tablets, PC etc. bekannt sind. Die Endgeräte für die mobile Kommunikation werden neben dem mobilen Telefonieren, mit verschiedenen Internet-Diensten kommunizieren.

### Anforderung:

Wenn Naturkatastrophen Menschen in Gefahr bringen und ganze Regionen selbst für schweres Gerät kaum passierbar machen, kommt es für Retter und Hilfskräfte im ersten Moment vor allem auf eines an: **einen schnellen und möglichst umfassenden Überblick von der Lage vor Ort zu bekommen.** Erfinder sollen neue Software entwickeln, die eine **Kommunikation zwischen Rettungsfahrzeugen** und **Aufklärungsdrohnen ermöglicht.** Dies erfordert ein Erkennungssystem, das Hilfs- und Einsatzkräfte in Krisen- und Katastrophengebieten mit wichtigen Informationen versorgt. Diese Technologie kann für die Land- und Forstwirtschaft wenn es um die Erkundung unzugänglicher Gebiete geht, im Baugewerbe oder bei Brückeninspektionen eingesetzt werden. Natürlich kann die Steuerungsschnittstelle zwischen Drohne und Basisfahrzeug auch bei der Suche und Rettung Hilfsbedürftiger wichtige Dienste leisten.

**Erfindungsgemäß ist vorgesehen,** dass die Erreichbarkeit, Betriebsfähigkeit sowie Kommunikationsfähigkeit bei Nutzung obiger Geräte ständig sichergestellt ist, bei Eintritt und / oder bevorstehender potentieller Gefahrensituationen eine entsprechende Warnung erzeugt wird, eine Begleitung / Verfolgbarkeit / Steuerung von Objekten und Personen gegeben ist sowie multifunktionale Kommunikation in allen Bereichen vorhanden ist.

**Die Erfindung betrifft ein universelles Kommunikationssystem,** mit mindestens einem transportablen Mobilteil sowie Apps, als Kommunikations-, Informations- und Navigationssystem, wobei das System mit Navigations- und Übertragungsstandards und/oder mit sonstigen verfügbaren Kommunikations- oder Übertragungs-Systemen arbeitet und mit einem Peilsystem, einem Informationssystem, einem Rechner und einem Kontrollsystem zusammenwirkt und mindestens ein Mobilteil mit entsprechender Software und ggf. sonstige Komponenten enthält. Insbesondere die automatische Steuerung, Überwachung, Kontrolle, Berechnung und Warnung im Bereich von Sicherheits- und / oder Notfall- / Notruffunktionen sind wesentliche Bestandteile der Erfindung, sodass damit ein höchstes Maß an Sicherheit für Nutzer, Organisationen und Objekte gegeben ist. Bei **Drohnen** ist oft die Kombination von Drohnendetektion mit Perimeter Sicherung anhand von Videobildanalysen sinnvoll. **So können Erfassungs- und Alarmzonen definiert und von Anwendern mit unterschiedlichen Reaktionsszenarien belegt werden.**

### Beschreibung:

**Die Erfindung betrifft ein universelles Kommunikationssystem, eine Funktionsvorrichtung insbesondere zur automatischen Überwachung, Kontrolle sowie bedarfs- und situationsgerechter Steuerung von Sicherheitsrelevanten Elementen und/oder Funktionssegmenten, Objekten (z.B. auch Drohnen), Personen (z.B. bei Behinderungen), Veranstaltungen mit Verbindung von Netzwerken und Daten durch Berechnungen und/oder Vergleichen zur Aktivierung und** / **oder Abschaltung von Funktionselementen und/oder Funktionssegmenten sowie die Vernetzung und Nutzung von verschiedenen Kommunikationsnetzen.** Geräte mit Funktionen und / oder Anwendungen in Mobilteilen für Navigations-, Positions-, Ortungs-, Kommunikations- und / oder Informationssystemen sind bekannt. Auch solche, die in Notfall- und / oder sonstigen Sicherheitssystemen verwendet werden können. Herkömmliche Kommunikations- und bekannte Navigationssysteme arbeiten vorzugsweise mit traditionellen Navigations- und / oder Mobilfunk - Standards.

## Patentansprüche

1. **Universelles Kommunikationssystem,** mit mindestens einem transportablen Mobilteil als (SK) Kommunikations-, (SI) Informations- und (SN) Navigationssystem, wobei das System mit Navigations- und Übertragungsstandards und/oder mit sonstigen verfügbaren Kommunikations- oder Übertragungsmitteln und/oder -Anlagen arbeitet und hauptsächlich aus einem Navigations-System, einem Peilsystem , einem Informationssystem, einem Rechner, einem Kontrollsystem und mindestens einem Mobilteil und/oder. **Vernetzung mehrerer Mobilteile** (....) sowie ggf. sonstigen Komponenten und entsprechender Software besteht, **dadurch gekennzeichnet ist, dass** es zusätzlich als Notfall-System (SN) und/oder Sicherheitssystem (SS) ausgebildet ist und dass globale und/oder regionale Sende- und/oder Empfangsanlagen (4) vorhanden und einsetzbar sind, zur Ausstrahlung und/oder zur Aufnahme aktueller, insbesondere auch regionaler Informationen (60), Warnungen (61) und/oder sonstigen aktueller und/oder regionaler Daten und Meldungen. **Zukünftige Entwicklungen und Anforderungen aus dem Bereich 5G sowie "Künstliche Intelligenz (KI) sind zu berücksichtigen.** Die Künstliche Intelligenz (KI) für die mobile Kommunikation durchdringt atem-beraubend schnell unsere Alltagswelt in Form sprechender Geräte und **digitaler Assistenten, kooperativer Roboter, autonomer Fahrzeuge und Drohnen.**
**5G** - **Das Highspeed-Mobilfunknetz der Zukunft**

2. **Kommunikationssystem nach Anspruch 1. dadurch gekennzeichnet, dass** das Mobilteil eine transportable aktive und/oder interaktive Kommunikationsvorrichtung für wechselseitigen Signal- und Datenaustausch ist und als Ortungs-, Notfall- und/oder Sicherheitsgerät gestaltet und einsetzbar ist. Insbesondere auch als Mobiltelefon (z.B. Smartphone), Navigations- und Ortungsgerät, als Handheld und/oder als sonstiges leicht transportables Sende- und Empfangsgerät, dass es Mittel aufweist, womit aktuelle und/oder regionale Informationen (60 - auch als Empfehlungen), Warnungen (61) und/oder sonstige Daten oder Mitteilungen manuell und/oder automatisch empfangen und/oder an diese weitergeben, sowie gespeichert, verarbeitet und/oder ausgewertet werden können.
**Hohe Sicherheitsanforderungen**
Mit 5G werden noch mehr Daten an noch mehr Geräte übertragen: Geräte und Daten müssen vor unbefugtem Zugriff geschützt werden

3. **Mobilteil und Apps (Anwendungssoftware)** für ein universelles Kommunikationssystem, das als (SK) Kommunikations-, (SI) Informations- und (SN) Navigationssystem und zusätzlich als Notfall-System (SN) und/oder als Sicherheitssystem (SS) ausgebildet ist, zur Ausstrahlung und/oder Aufnahme aktueller, insbesondere auch regionaler Informationen, Warnungen, Empfehlungen und/oder sonstiger aktueller und/oder regionaler Daten oder Meldungen, wobei das System mit Navigations- und Übertragungsstandards und/oder mit sonstigen verfügbaren Kommunikations- oder Übertragungs-Mitteln und/oder Anlagen arbeitet und hauptsächlich aus einem Navigations-System, einem Peilsystem, einem Rechner, einem Kontrollsystem und mindestens einem Mobilteil sowie ggf. sonstigen Komponenten und entsprechender Software besteht, nach Anspruch 1 oder 2, **dadurch gekennzeichnet, dass** es Mittel aufweist, zum gegenseitigen Datenaustausch, zur Kommunikation und/oder zur Ortung durch und von globaler und/oder regionalen Sende- und/oder Empfangsanlagen (4) und/oder von und mit gleichartigen "Partner-Mobilteilen", d.h. weiteren Mobilteilen untereinander und/oder von oder mit regionalen Notrufstationen, Funkstationen und/oder sonstigen Sendern und/oder Empfängern.
**Zuverlässiges Netz**
5G sorgt für stabile Verbindungen: auch bei Tempo 600 im Zug und in Randbereichen von Mobilfunkzellen

4. **Mobilteil und Apps** nach Anspruch 3, **dadurch gekennzeichnet, dass** es Mittel aufweist, zum manuellen und/oder automatischen Empfangen, Laden, Verarbeiten und/oder Wiedergeben aktueller und/oder regionaler Informationen, Pläne und Daten (6) wie Routenpläne, Daten zur geographischen Beschaffenheit des aktuellen Geländes, Sturm- oder Lawinenwarnungen, Unfallmeldungen, Streckenempfehlungen, Wetter- oder Suchmeldungen und/oder sonstiger relevanter Situationsdarstellungen.
**Intelligente Verbindungen**
5G in der Smart City: Signale bewegen sich zielgerichtet zu den Geräten, für die sie bestimmt sind

5. **Mobilteil und Apps** nach einem der vorhergehenden Ansprüche **dadurch gekennzeichnet ist, dass** es Vorrichtungen und Mittel aufweist, zur automatischen Warnung und Alarmierung des Trägers nach Eingang entsprechender , insbesondere sicherheitsrelevanter Meldungen oder Informationen beim Erreichen gefährdeter Gebiete/Zonen/Regionen, zur Vermeidung von Notfällen durch rechtzeitige Warnung und Auslösung eines sogenannten "Zonenalarm".
**100-fach höhere Übertragungsgeschwindigkeit** Mit 5G Daten in Echtzeit senden und empfangen: wichtig für Industrie 4.0 - aber auch für ein
überzeugendes Nutzererlebnis im Alltag

6. **Mobileteil und Apps** nach einem der vorhergehenden Ansprüche **dadurch gekennzeichnet ist, dass** es Vorrichtungen und Mittel aufweist, zur manuellen und/oder automatischen Alarmierung einer Notrufstation und/oder weiterer "Partner Mobilteile" nach Eintritt einer akuten Notsituation des Mobilteilnutzers.
**1000-fach höhere Datenkapazität**
Mit 5G können viele Anwender schnell gleichzeitig senden und empfangen: Besonders bei Großveranstaltungen profitieren die Nutzer

7. **Mobileteil und Apps** nach einem der vorhergehenden Ansprüche **dadurch**
**gekennzeichnet ist, dass** es Vorrichtungen und Mittel aufweist, zum Verarbeiten der eingehenden Informationen und Warnungen und zur Erstellung und Anzeige oder Ausgabe aktueller Routenvorschläge im 2D und/oder 3D-Format.
**50 Milliarden vernetzte Geräte bis 2020**
5G wird Wegbereiter für das Smart Home: der Kühlschrank ist vernetzt, WLAN-Router und TV-Gerät lassen sich aus der Ferne programmieren

8. **Mobileteil und Apps** nach einem der vorhergehenden Ansprüche **dadurch gekennzeichnet ist, dass** es Vorrichtungen und Mittel aufweist, zum Aufnehmen und zum Speichern von insbesondere per Funk-, Ultraschall- oder Infrarot-Übertragung erhaltener aktueller, regionaler Daten, zu deren Erfassung, Speicherung und zur manuellen oder automatischen, ggf. zeitlich und/oder örtlich vernetzten Wiedergabe an z.B. ortsversetzte Fremdgeräte, insbesondere an globale und/oder regionale Sende- und/oder Empfangsanlagen.

9. **Mobileteil und Apps** nach einem der vorhergehenden Ansprüche **dadurch gekennzeichnet ist, dass** es Mittel aufweist, mit deren Hilfe Navigationsstandards wie "GPS", "DGPS", "GSM" "GNSS", "EGNOS", "Galileo", "Glonass", "Beidou"-Signale, herkömmliche digitale oder analoge Telefonsignale und/oder Übertragungssysteme wie "EGNOS", "Galileo", "Bluetooth", WEP-Standards, PDA-Multimedia-Card-Standards und/oder andere Standards oder Anwendungen wie: SMS, Multimedia, Voice, WAP-Protocol, PDA, WLAN, EWAN, RIMS, PBCC, OFDM, Wi-Fi, (D)GPS-Signale, Infrarot-Signale, herkömmliche digitale oder analoge Telefonsignale, UMTS-Signale, herkömmliche oder analoge Telefonsignale, Kurz-, Ultrakurz-, Mittel- oder Langwellen- bzw. Amateur-, Minifunk- oder sonstige Rundfunksignale und/oder Funksignale spezieller oder verschiedener Frequenzen empfangen, verarbeiten, wiedergeben und/oder gesendet werden können und/oder Internet-und/ Intranet-Kommunikation ermöglicht wird bzw. erfolgen kann.

10. **Mobileteil und Apps** nach einem der vorhergehenden Ansprüche **dadurch gekennzeichnet ist, dass** es mindestens einen Sender, einen Empfänger, eine Peilkomponente, einen Mobilteil-Rechner, einen Speicher und Mittel aufweist, mit deren Hilfe es mit einer Kontrollstation bzw. mit einer zugehörigen Basisstation und/oder mit einem Peilsystem, sowie ggf. auch mit regionalen Notfall-Rettungs-Systemen direkt kommunizieren kann und dass es von diesen Systemen, von sonstigen Anlagen und/oder von "Partnergeräten" aus direkt oder indirekt angepeilt und geortet werden kann, im Sinne einer sogenannten "Kameradenrettung".

11. **Mobileteil und Apps** nach einem der vorhergehenden Ansprüche **dadurch gekennzeichnet ist, dass** es mindestens eine Eingabeeinheit und Eingabemittel aufweist, Vorrichtungen und Mittel aufweist, insbesondere zur individuellen Neu-Programmierung, zur Ergänzung oder Änderung eingegebener Routenpläne oder Profilvorgaben und/oder sonstiger Befehle und Daten, durch manuelle Dateneingabe und/oder durch automatische Einspielung, wobei die Eingabeeinheit ein Empfangs- und Erfassungsteil, eine interne oder externe Tastatur und/oder ein Sprachmodul mit Mikrophon und mit Lautsprecher aufweist oder ist, zur akustischen Systemsteuerung und/oder zur manuellen oder automatischen Daten-Ein- und/oder Daten-Ausgabe.

12. **Mobileteil** und Apps nach einem der vorhergehenden Ansprüche **dadurch gekennzeichnet ist, dass** es ein Kommunikations-, Übertragungs-, Orientierungs-, Sicherheits- und/oder Notrufgerät für Wanderer, Spaziergänger, Jogger, Kinder, ältere Menschen, Kranke, Behinderte, Bedrohte jeglicher Art, Skiwanderer, Skifahrer, Snowboarder, Tourengeher, Kletterer, Bergwanderer, Autofahrer, Radfahrer, Bootsfahrer, Ballonfahrer und/oder für Flieger aller Art ist.
Nicht nur die Maschinen vernetzen sich, auch wir vernetzen uns digital immer mehr - über Communities, soziale Netzwerke, Firmennetzwerke, Lernplattformen. **Augmented Reality (AR)** bedeutet, dass die reale Welt mit virtuellen Inhalten angereichert wird

13. **Mobileteil und Apps** nach einem der vorhergehenden Ansprüche **dadurch gekennzeichnet ist, dass** es eine Vorrichtung zum Aufnehmen und Speichern von insbesondere per Funk wiedergegebener und/oder erhaltener aktueller, regionaler Daten, zu deren Aufnahme, Speicherung und Wiedergabe ist, wobei ein oder mehrere Mobilteile, aktuelle Daten eines Senders mit z.B. geringer Reichweite in deren Nähe übernehmen und an einen externen Empfänger in dessen Nähe wieder abgeben im Rahmen eines interaktiven bzw. bi-direktionalen Informationssystems.

14. **Mobileteil und Apps** nach einem der vorhergehenden Ansprüche **dadurch gekennzeichnet ist, dass** es Vorrichtung ist, zur automatischen Aufzeichnung von Daten, Wegstrecken, Höhen, Geschwindigkeiten, Gefälle, Routen und Pisten sowie zur Auswertung dieser Daten zur Leistungsermittlung, für Wettbewerbe und/oder Vergleiche mit gleichartigen Werten Dritter und/oder zur Rückverfolgbarkeit zurückgelegter Strecken oder Routen des Benutzers.

## Geänderte Patentansprüche

### Geänderte Patentansprüche gemäss Regel 137(2) EPÜ.

1. **Universelles Kommunikationssystem,** mit mindestens einem transportablen Mobilteil als (SK) Kommunikations-, (SI) Informations- und (SN) Navigationssystem, **wobei das System mit Navigations- und Übertragungsstandards und mit sonstigen verfügbaren Kommunikations- und Übertragungsmitteln/Anlagen arbeitet und aus folgenden Komponenten besteht: Einem Navigations-System, einem Peilsystem, einem Informationssystem, einem Rechner, einem Kontrollsystem,** einer **Vernetzung mehrerer Mobilteile** sowie sonstigen Komponenten und entsprechender Software. Es ist **dadurch gekennzeichnet, dass** es zusätzlich als **Notfall-System (SN) und Sicherheitssystem (SS) ausgebildet ist** und dass globale und regionale Sende- und Empfangsanlagen vorhanden und einsetzbar sind, zur Ausstrahlung und zur Aufnahme aktueller, auch regionaler Informationen, Warnungen und sonstigen aktueller und regionaler Daten und Meldungen. **Technologische Basis des Systems sind die *Anwendungen im Bereich der "Mobilen Kommunikation" zur effektiven Nutzung und Anwendung der Vernetzung von "Internet der Dinge" ("Internet of Things") sowie Drohnen zur Sicherheit und Nutzung der Künstlichen Intelligenz (KI) im Bereich der Mobilen Kommunikation sowie "Augmented Reality für die Navigation"* - *dabei erhält der Nutzer auf dem Weg zu seinem Zielort, zusätzliche Informationen in Abhängigkeit zum aktuellen Standort (z.B. Stauwarnungen; Umleitungen; Gebäudeinformationen).***

2. **Kommunikationssystem nach Anspruch** 1. **dadurch gekennzeichnet, dass** das Mobilteil eine transportable aktive und interaktive Kommunikationsvorrichtung für wechselseitigen Signal- und Datenaustausch ist und als Ortungs-, Notfall- und Sicherheitsgerät gestaltet und einsetzbar ist. Als Mobiltelefon (z.B. Smartphone), Navigations- und Ortungsgerät, als Handheld und als sonstiges leicht transportables Sende- und Empfangsgerät, dass es Mittel aufweist, womit aktuelle und regionale Informationen, Warnungen und sonstige Daten oder Mitteilungen manuell und automatisch empfangen und an diese weitergeben, sowie gespeichert, verarbeitet und ausgewertet werden können.

3. **Mobilteil und Apps (Anwendungssoftware)** für ein universelles Kommunikationssystem, das als (SK) Kommunikations-, (SI) Informations- und (SN) Navigationssystem und zusätzlich als Notfall-System (SN) und/oder als Sicherheitssystem (SS) ausgebildet ist, zur Ausstrahlung und/oder Aufnahme aktueller, insbesondere auch regionaler Informationen, Warnungen, Empfehlungen und/oder sonstiger aktueller und/oder regionaler Daten oder Meldungen, wobei das System mit Navigations- und Übertragungsstandards und/oder mit sonstigen verfügbaren Kommunikations- oder Übertragungs-Mitteln und/oder Anlagen arbeitet und hauptsächlich aus einem Navigations-System, einem Peilsystem, einem Rechner, einem Kontrollsystem und mindestens einem Mobilteil sowie ggf. sonstigen Komponenten und entsprechender Software besteht, nach Anspruch 1 oder 2, **dadurch gekennzeichnet, dass** es Mittel aufweist, zum gegenseitigen Datenaustausch, zur Kommunikation und/oder zur Ortung durch und von globaler und/oder regionalen Sendeund/oder Empfangsanlagen (4) und/oder von und mit gleichartigen "Partner-Mobilteilen", d.h. weiteren Mobilteilen untereinander und/oder von oder mit regionalen Notrufstationen, Funkstationen und/oder sonstigen Sendern und/oder Empfängern.

4. **Mobilteil und Apps** nach Anspruch 3, **dadurch gekennzeichnet, dass** es Mittel aufweist, zum manuellen und/oder automatischen Empfangen, Laden, Verarbeiten und/oder Wiedergeben aktueller und/oder regionaler Informationen, Pläne und Daten (6) wie Routenpläne, Daten zur geographischen Beschaffenheit des aktuellen Geländes, Sturm-oder Lawinenwarnungen, Unfallmeldungen, Streckenempfehlungen, Wetter- oder Suchmeldungen und/oder sonstiger relevanter Situationsdarstellungen.

5. **Mobilteil und Apps** nach einem der vorhergehenden Ansprüche **dadurch gekennzeichnet ist, dass** es Vorrichtungen und Mittel aufweist, zur automatischen Warnung und Alarmierung des Trägers nach Eingang entsprechender , insbesondere sicherheitsrelevanter Meldungen oder Informationen beim Erreichen gefährdeter Gebiete/Zonen/Regionen, zur Vermeidung von Notfällen durch rechtzeitige Warnung und Auslösung eines sogenannten "Zonenalarm".

6. **Mobileteil und Apps** nach einem der vorhergehenden Ansprüche **dadurch gekennzeichnet ist, dass** es Vorrichtungen und Mittel aufweist, zur manuellen und/oder automatischen Alarmierung einer Notrufstation und/oder weiterer "Partner Mobilteile" nach Eintritt einer akuten Notsituation des Mobilteilnutzers.

7. **Mobileteil und Apps** nach einem der vorhergehenden Ansprüche **dadurch gekennzeichnet ist, dass** es Vorrichtungen und Mittel aufweist, zum Verarbeiten der eingehenden Informationen und Warnungen und zur Erstellung und Anzeige oder Ausgabe aktueller Routenvorschläge im 2D und/oder 3D-Format.

8. **Mobileteil und Apps** nach einem der vorhergehenden Ansprüche **dadurch gekennzeichnet ist, dass** es Vorrichtungen und Mittel aufweist, zum Aufnehmen und zum Speichern von insbesondere per Funk-, Ultraschall- oder Infrarot-Übertragung erhaltener aktueller, regionaler Daten, zu deren Erfassung, Speicherung und zur manuellen oder automatischen, ggf. zeitlich und/oder örtlich vernetzten Wiedergabe an z.B. ortsversetzte Fremdgeräte, insbesondere an globale und/oder regionale Sende- und/oder Empfangsanlagen.

9. **Mobileteil und Apps** nach einem der vorhergehenden Ansprüche **dadurch gekennzeichnet ist, dass** es Mittel aufweist, mit deren Hilfe Navigationsstandards wie "GPS", "DGPS", "GSM" "GNSS", "EGNOS", "Galileo", "Glonass", "Beidou"-Signale, herkömmliche digitale oder analoge Telefonsignale und/oder Übertragungssysteme wie "EGNOS", "Galileo", "Bluetooth", WEP-Standards, PDA-Multimedia-Card-Standards und/oder andere Standards oder Anwendungen wie: SMS, Multimedia, Voice, WAP-Protocol, PDA, WLAN, EWAN, RIMS, PBCC, OFDM, Wi-Fi, (D)GPS-Signale, Infrarot-Signale, herkömmliche digitale oder analoge Telefonsignale, UMTS-Signale, herkömmliche oder analoge Telefonsignale, Kurz-, Ultrakurz-, Mittel- oder Langwellen- bzw. Amateur-, Minifunk- oder sonstige Rundfunksignale und/oder Funksignale spezieller oder verschiedener Frequenzen empfangen, verarbeiten, wiedergeben und/oder gesendet werden können und/oder Internet-und/ Intranet-Kommunikation ermöglicht wird bzw. erfolgen kann.

10. **Mobileteil und Apps** nach einem der vorhergehenden Ansprüche **dadurch gekennzeichnet ist, dass** es mindestens einen Sender, einen Empfänger, eine Peilkomponente, einen Mobilteil-Rechner, einen Speicher und Mittel aufweist, mit deren Hilfe es mit einer Kontrollstation bzw. mit einer zugehörigen Basisstation und/oder mit einem Peilsystem, sowie ggf. auch mit regionalen Notfall-Rettungs-Systemen direkt kommunizieren kann und dass es von diesen Systemen, von sonstigen Anlagen und/oder von "Partnergeräten" aus direkt oder indirekt angepeilt und geortet werden kann, im Sinne einer sogenannten "Kameradenrettung".

11. **Mobileteil und Apps** nach einem der vorhergehenden Ansprüche **dadurch gekennzeichnet ist, dass** es mindestens eine Eingabeeinheit und Eingabemittel aufweist, Vorrichtungen und Mittel aufweist, insbesondere zur individuellen Neu-Programmierung, zur Ergänzung oder Änderung eingegebener Routenpläne oder Profilvorgaben und/oder sonstiger Befehle und Daten, durch manuelle Dateneingabe und/oder durch automatische Einspielung, wobei die Eingabeeinheit ein Empfangs- und Erfassungsteil, eine interne oder externe Tastatur und/oder ein Sprachmodul mit Mikrophon und mit Lautsprecher aufweist oder ist, zur akustischen Systemsteuerung und/oder zur manuellen oder automatischen Daten-Ein- und/oder Daten-Ausgabe.

12. **Mobileteil** und Apps nach einem der vorhergehenden Ansprüche **dadurch gekennzeichnet ist, dass** es ein Kommunikations-, Übertragungs-, Orientierungs-, Sicherheits- und/oder Notrufgerät für Wanderer, Spaziergänger, Jogger, Kinder, ältere Menschen, Kranke, Behinderte, Bedrohte jeglicher Art, Skiwanderer, Skifahrer, Snowboarder, Tourengeher, Kletterer, Bergwanderer, Autofahrer, Radfahrer, Bootsfahrer, Ballonfahrer und/oder für Flieger aller Art ist.
Nicht nur die Maschinen vernetzen sich, auch wir vernetzen uns digital immer mehr - über Communities, soziale Netzwerke, Firmennetzwerke, Lernplattformen. **Augmented Reality (AR)** bedeutet, dass die reale Welt mit virtuellen Inhalten angereichert wird

13. **Mobileteil und Apps** nach einem der vorhergehenden Ansprüche **dadurch gekennzeichnet ist, dass** es eine Vorrichtung zum Aufnehmen und Speichern von insbesondere per Funk wiedergegebener und/oder erhaltener aktueller, regionaler Daten, zu deren Aufnahme, Speicherung und Wiedergabe ist, wobei ein oder mehrere Mobilteile, aktuelle Daten eines Senders mit z.B. geringer Reichweite in deren Nähe übernehmen und an einen externen Empfänger in dessen Nähe wieder abgeben im Rahmen eines interaktiven bzw. bi-direktionalen Informationssystems.

14. **Mobileteil und Apps** nach einem der vorhergehenden Ansprüche **dadurch gekennzeichnet ist, dass** es Vorrichtung ist, zur automatischen Aufzeichnung von Daten, Wegstrecken, Höhen, Geschwindigkeiten, Gefälle, Routen und Pisten sowie zur Auswertung dieser Daten zur Leistungsermittlung, für Wettbewerbe und/oder Vergleiche mit gleichartigen Werten Dritter und/oder zur Rückverfolgbarkeit zurückgelegter Strecken oder Routen des Benutzers.
